# EUROPEAN PATENT APPLICATION

(11) **EP 2 030 676 A1**
(43) Date of publication of application: **04.03.2009**
(21) Application number: 07114410.9
(22) Date of filing: 16.08.2007
(51) Int. Cl.: B01J 8/00, B01J 8/02, B01J 8/06

(54) **Catalyst replacement method**

(71) Applicant: SHELL INTERNATIONALE RESEARCH MAATSCHAPPIJ B.V., 2596 HR Den Haag (NL)
(72) Inventor: The designation of the inventor has not yet been filed
(74) Representative: Zeestraten, Albertus W. J.

(57) **Abstract**

The invention relates to a method of replacing deactivated heterogeneous catalyst by fresh catalyst, comprising:
(1) placing fresh catalyst into a reactor;
(2) introducing reactants into the reactor;
(3) continuously operating the reactor to catalyze a reaction of the reactants to products, wherein the catalyst is substantially stationary, the reaction creates deactivated catalyst and the catalyst is non-uniformly deactivated across the reactor;
(4) at the end of a time period Δtᵢ: withdrawing a portion of the catalyst, placing fresh catalyst into the part of the reactor from which said portion of the catalyst has been withdrawn, and repeating the method from step (2); and
(5) at the end of a time period ΔT: withdrawing all of the catalyst and repeating the method from step (1);

in which method:
- Δtᵢ runs from the time at which the reactants are introduced in step (2) to the time at which a portion of the catalyst is replaced by fresh catalyst in step (4);
- ΔT runs from the time at which the reactants are introduced in step (2), after having performed step (1), to the time at which all catalyst is replaced by fresh catalyst in step (5);
- i in Δtᵢ is an integer and is from 1 to n;
- n is equal to or greater than 1 and represents the number of times that within ΔT a portion of the catalyst is replaced by fresh catalyst in step (4);
- in repeating the method from step (2) after having replaced a portion of the catalyst by fresh catalyst at the end of Δtₙ, step (4) is not performed but step (5) is performed;
- the summation of all Δtᵢ, wherein i is from 1 to n, is smaller than ΔT; and
- the portion of the catalyst to be withdrawn in step (4) is deactivated to a greater extent than the portion of the catalyst remaining in the reactor.

## Description

The present invention relates to a catalyst replacement method, more in particular a method wherein deactivated catalyst is replaced by fresh catalyst. The catalyst in question is a solid, heterogeneous catalyst.

The use of solid heterogeneous catalysts in industrial catalytic reactors is well known. In general, catalysts have a variety of chemical compositions and take different forms, including powders or particles in fixed, moving, fluidized, or slurry beds, and porous or permeable monoliths, foams, gauzes, and the like. Depending on the requirements of a particular process, multiple catalyst beds may be employed in a single catalytic reactor, or multiple reactors may be employed in parallel and/or serial configurations, with respect to the path of the reactant and product fluids and/or gases.

Regardless of the reactor configuration, over a period of time in use on stream, a catalyst typically loses part or all of its activity for catalyzing the desired chemical reaction(s). In some cases, this catalyst inactivation is due to gradual poisoning by a contaminant (e.g., sulfur, or metals) in a reactant feedstock, or by deposition of the product of an undesired side reaction (e.g., coking). In other cases, a catalyst is deactivated under the influence of a relatively high temperature (e.g. sintering) which may be caused by an exothermic reaction inside the reactor. When the efficiency or quality of the reactor output diminishes sufficiently, it becomes necessary to remove the spent or deactivated catalyst and replace it with fresh catalyst in order to restore the desired level of productivity of the reactor.

A variety of catalyst removal and replacement strategies are employed conventionally. One of the simplest ways consists of halting the process after the efficiency of the reactor has deteriorated to an unacceptable level, and, if appropriate, regenerating in situ the catalyst that is retained inside the reactor column. Alternatively, all of the catalyst is removed and replaced by fresh catalyst. A drawback of the latter approach is that by removing all catalyst, also catalyst is removed that is only partially spent or deactivated to such extent that it could still be used satisfactorily in the process. This has the effect that the total activity of all catalyst is not fully benefited from. As a consequence, for producing a certain amount of product more catalyst is required which increases total cost of the process.

The above-mentioned drawback has been recognised in prior art, as far as processes are concerned wherein reactants and products move from the one end of the reactor where the reactants are introduced to the other end of the reactor where the products are discharged.

First of all, it has been proposed in processes wherein the catalyst randomly moves within the reactor, e.g. in a fluidized or ebulliated catalyst bed reactor, to only remove a portion of the catalyst and replace it by fresh catalyst rather than removing all of the catalyst. See e.g. US-A-4,902,407. The amount of catalyst to be removed and replaced each time and the frequency of this partially removing and replacing catalyst should, in general, be such that a sufficiently high equilibrium catalyst activity is maintained. In such cases where the catalyst is in random motion in the reactor, the catalyst is uniformly deactivated across the reactor from the one end of the reactor where the reactants are introduced to the other end of the reactor where the products are discharged. This means that fresh catalyst and (partially) deactivated catalyst are uniformly mixed throughout the entire reactor. In accordance with the present specification, a "substantially uniform catalyst deactivation distribution" across the reactor means that the catalyst is thoroughly mixed such that any sample of the catalyst taken from any region of the reactor bed will have a substantially equivalent average deactivation as any other sample, and the bed as a whole, when taken at the same time.

A drawback of such substantially uniform deactivation distribution across the reactor is that even when only a portion of catalyst is removed, the withdrawn catalyst always ranges in age from brand new to very old (and deactivated) catalyst. This results in loss of valuable fresh catalyst.

Secondly, in processes wherein the catalyst moves in a particular direction within the reactor, either co-currently or counter-currently with the reactants and/or products, sometimes also referred to as a moving catalyst bed reactor, in general, neither all of the catalyst is removed and replaced all at once. See e.g. US-A-3,725,248 which describes a series flow reactor system in which all reactors remain on stream during a reforming process. Each reactor contains an annular dense-phase moving bed of catalyst particles and a catalyst collector. The catalyst is processed through the reactor system counter-current to the direction of reactant flow. Fresh or regenerated catalyst is charged to the top of the reactor. A like quantity of partially spent catalyst is withdrawn from the bottom of each reactor.

Thus, unlike cases where the catalyst is in random motion in the reactor, in the case of a moving catalyst bed reactor the catalyst age distribution in such catalyst system is very old spent catalyst at one end, e.g. the bottom, of the reactor with fresh catalyst being fed into the other end, e.g. the top, of the reactor. Therefore, in case of a moving catalyst bed reactor, the catalyst is non-uniformly deactivated across the reactor from the one end of the reactor where the reactants are introduced to the other end of the reactor where the products are discharged.

The present invention is directed to a method of replacing deactivated catalyst by fresh catalyst, the catalyst being a solid, heterogeneous catalyst, where the catalyst is substantially stationary within the reactor but the reactants and products move from one end to the other end of the reactor. With substantially stationary catalyst, a catalyst is meant which does not move to a great extent, either randomly or in a particular direction, throughout the reactor, such as may be the case in fixed catalyst bed reactors. In such cases, the catalyst is non-uniformly deactivated across the reactor from said one end to said other end. For example, catalyst at the top may be more deactivated than catalyst at the bottom, or vice versa, or catalyst in the middle may be most deactivated, depending on the particular process for which the catalyst is used. Prior art concerning such cases, teaches that at the end of a certain time period at which the average activity of all catalyst within the reactor has decreased to a value below a certain level that makes continued operation uneconomic, all of the catalyst is removed and replaced by fresh catalyst. See e.g. Deactivation of Catalysts, by R. Hughes, 1984, Academic Press, p. 212. However, by doing that also that portion of the catalyst is removed that is only partially or deactivated to such extent that it could still be used satisfactorily in the process. Removing and discarding such catalyst portion thus results in loss of still valuable catalyst.

The object of the present invention is to provide a catalyst replacement method for those cases where the catalyst is stationary and the reactants and products move in a particular, not necessarily the same, direction within the reactor, which extends the time period at the end of which all of the catalyst has to be replaced by fresh catalyst, such that on total less catalyst is needed for achieving a particular production level in time.

The above object has been achieved by partially withdrawing catalyst one or more times within the above-mentioned time period at the end of which all of the catalyst has to be replaced by fresh catalyst, wherein the withdrawn portion of the catalyst is deactivated to a greater extent than the portion of the catalyst which remains within the reactor, and replacing the partially withdrawn catalyst by fresh catalyst.

Accordingly, the present invention relates to a method of replacing deactivated heterogeneous catalyst by fresh catalyst, comprising:
(1) placing fresh catalyst into a reactor;
(2) introducing reactants into the reactor;
(3) continuously operating the reactor to catalyze a reaction of the reactants to products, wherein the catalyst is substantially stationary, the reaction creates deactivated catalyst and the catalyst is non-uniformly deactivated across the reactor;
(4) at the end of a time period Δtᵢ: withdrawing a portion of the catalyst, placing fresh catalyst into the part of the reactor from which said portion of the catalyst has been withdrawn, and repeating the method from step (2); and
(5) at the end of a time period ΔT: withdrawing all of the catalyst and repeating the method from step (1); in which method:
   - Δtᵢ runs from the time at which the reactants are introduced in step (2) to the time at which a portion of the catalyst is replaced by fresh catalyst in step (4);
   - ΔT runs from the time at which the reactants are introduced in step (2), after having performed step (1), to the time at which all catalyst is replaced by fresh catalyst in step (5);
   - i in Δtᵢ is an integer and is from 1 to n;
   - n is equal to or greater than 1 and represents the number of times that within ΔT a portion of the catalyst is replaced by fresh catalyst in step (4);
   - in repeating the method from step (2) after having replaced a portion of the catalyst by fresh catalyst at the end of Δtₙ, step (4) is not performed but step (5) is performed;
   - the summation of all Δtᵢ, wherein i is from 1 to n, is smaller than ΔT; and
   - the portion of the catalyst to be withdrawn in step (4) is deactivated to a greater extent than the portion of the catalyst remaining in the reactor.

The method of the present invention results in a more efficient use of the full catalytic potential of catalysts in general in any type of process using catalysts. This has been demonstrated in the Examples below more specifically in relation to a process wherein methylphenylcarbinol (MPC; 1-phenylethanol) is catalytically dehydrated into styrene and water. Therefore, in the present catalyst replacement method, preferably the reactants comprise 1-phenylethanol, the catalyst is an alumina catalyst and the products comprise styrene and water.

In the present catalyst replacement method deactivated catalyst is replaced by fresh catalyst. In accordance with the present specification, the term "fresh catalyst" does not include catalyst that has been regenerated. It may include for example new catalyst and freshly manufactured catalyst. Further, in accordance with the present specification, the term "deactivated catalyst" refers to catalyst that has an activity of less than 100% of the activity of fresh catalyst. Thus, said term does not necessarily indicate that the catalyst has lost all of its catalytic activity. Still further, the catalyst used in the present method is a solid, heterogeneous catalyst.

In a first step of the present method, fresh catalyst is placed into a reactor. The reactor (or reactor vessel) to be used may be a substantially horizontal reactor or a substantially vertical reactor. By a substantially horizontal reactor and a substantially vertical reactor is understood a reactor which is oriented, in use, substantially parallel or perpendicular, respectively, to the plane of the horizon. Preferably, the reactor is a substantially vertical reactor. Preferably, the reactor vessel for use in the present invention is tubular. Such a tubular reactor vessel can have a wide variety of shapes. For example, such a tubular reactor vessel can have a square, rectangular, circular or elliptical cross-section. For practical purposes a reactor vessel with a circular cross-section is preferred. Further, the tubular reactor is preferably a multitubular reactor, which is a tubular reactor containing multiple tubes wherein the multiple tubes contain the catalyst.

In a second step of the present method, reactants are introduced into the reactor. In accordance with the present specification, it is also envisaged that only one reactant is introduced into the reactor and/or only one product is formed. This is highly dependent on the specific process in question to which the present catalyst replacement method is applied. Therefore, in accordance with the present specification, the term reactants is to be read as reactant(s) and the term products is to be read as product(s).

In a third step of the present method, the reactor is continuously operated to catalyze a reaction of the reactants to products. This means that the reactants are continuously fed into the reactor and the products are continuously discharged from the reactor. Therefore, the reactants and products move in a particular direction within the reactor. The direction in which the reactants move and the direction in which the products move do not have to be same. Further, where more than one reactant is introduced, the directions in which the reactants move within the reactor do not have to be the same. This may be the case where reactants are introduced at different parts of the reactor. The same is valid for a situation where more than one product is formed. In general, the reactants move from the part where they are introduced into the reactor to one of the ends of the reactor, whereas the products move from the part where they are formed to the part of the reactor where they are discharged, which may be one of the ends of the reactor. Said ends of the reactor may e.g. comprise the top or upper part and bottom or lower part of a tubular reactor. Preferably, where the reactor is a substantially vertical, tubular reactor, the reactor is operated in downflow mode, which means that the reactants and products flow downwardly through the reactor from top to bottom.

Thus, in the present catalyst replacement method, the reactants and products move in a particular (i.e. not-random) direction whereas the catalyst remains substantially stationary within the reactor. With substantially stationary it is meant that the catalyst does not move to a great extent, either randomly or in a particular direction, throughout the reactor during operation, such as may be the case in fixed catalyst bed reactors. Therefore, preferably, the reactor is a fixed catalyst bed reactor. In such cases, when the reaction has created deactivated catalyst, the catalyst will be non-uniformly deactivated across the reactor. For example, where the reactor is a substantially vertical, tubular reactor wherein the reactants and products flow downwardly through the reactor from top to bottom, the catalyst at the top or in the upper part may be more deactivated than catalyst at the bottom or in the lower part. Which portion of the catalyst is deactivated most, is highly dependent on the particular process for which the catalyst is used, as well as the mechanism of deactivation of the catalyst in the process concerned.

At a certain point of time, the average activity of all catalyst has decreased to a value below a certain minimum required activity level. In accordance with the present specification, the term "minimum required activity level" may also relate to a minimum required selectivity or quality level below which relatively too much undesired side-products and too little of the desired products are formed. Thus, even in a case where the average activity of all catalyst is still sufficient, the selectivity of the catalyst may have deteriorated such that catalyst is to be replaced (either wholly or in part). Hereinafter, for ease of discussion, only reference is made to "activity" rather than "selectivity" or "quality of end product".

Examples of generally known indicators for catalyst deactivation are an increase in pressure drop across the reactor, a change in the temperature profile across the reactor (e.g. from inlet to outlet), etc. The magnitude of the minimum required activity level is highly dependent on the specific process concerned to which the present method is applied, and may be determined by technical and/or economic factors. It may for example be expressed as a certain percentage of the activity level of fresh (i.e. not regenerated) catalyst. Preferably, said minimum required level is 70%, more preferably 80% and most preferably 90% of the activity of fresh catalyst.

In accordance with the fourth step of the present method, at said point of time where the average activity of all catalyst has decreased to a value below a certain minimum required activity level, i.e. at the end of a time period Δtᵢ, a portion of the catalyst is withdrawn, fresh catalyst is placed into the part of the reactor from which said portion of the catalyst has been withdrawn, and the method is repeated from the second step (i.e. by restarting the introduction of reactants into the reactor). The portion of the catalyst to be withdrawn in the fourth step is deactivated to a greater extent than the portion of the catalyst remaining in the reactor. Preferably, before replacing said catalyst, all the reactants and products are first withdrawn from the reactor. Preferably, the withdrawn catalyst is replaced by a substantially equivalent amount of fresh catalyst.

Said time period Δtᵢ runs from the time at which the reactants are introduced in the second step to the time at which a portion of the catalyst is replaced by fresh catalyst in the fourth step. i in Δtᵢ is an integer and is from 1 to n and n is equal to or greater than 1. n represents the number of times that within a time period ΔT a portion of the catalyst is replaced by fresh catalyst in the fourth step. At the end of said time period ΔT all catalyst is replaced by fresh catalyst in the fifth step which is further discussed below. The number n of time periods Δtᵢ within said time period ΔT may vary widely, e.g. from 1 to 10, preferably from 1 to 5 and more preferably from 1 to 3.

Thus, said time period Δtᵢ runs from the time at which the reactants are introduced, either for the first time or for the second time, etc. within time period ΔT. After having replaced said catalyst and restarted the introduction of reactants, a new time period Δtᵢ begins, at the end of which catalyst is partially replaced again, unless the previous time period was time period Δtₙ. In the latter case, in repeating the method from the second step after having replaced a portion of the catalyst by fresh catalyst at the end of Δtₙ, the fourth step is not performed but the fifth step of the present method is performed which is further discussed below. The summation of all Δtᵢ, wherein i is from 1 to n, is smaller than ΔT.

The portion of catalyst to be replaced in accordance with the fourth step of the present method, is deactivated to a greater extent than the portion of the catalyst remaining in the reactor. The amount of catalyst in the portion of the catalyst to be withdrawn in said fourth step should be such that, after having replaced the withdrawn catalyst by fresh catalyst, the average activity of all catalyst has raised to a value at or above the above-mentioned minimum required activity level. For example, where the reactor is a substantially vertical, tubular reactor wherein the reactants and products flow downwardly through the reactor from top to bottom, the catalyst at the top or in the upper part may be more deactivated than catalyst at the bottom or in the lower part. For example, it may be the case that a top layer functions as a kind of filter (or guard bed) holding back any contaminants the reactant feed may contain (poisoning of catalyst in top layer). In such case, it is preferred to withdraw the top layer of catalyst and replace it by fresh catalyst. Therefore, in a case wherein the reactor is a substantially vertical, tubular reactor wherein the reactants and products flow downwardly through the reactor from top to bottom, preferably a portion of the catalyst that originates from the top or upper part of the reactor is replaced by fresh catalyst at the end of a time period Δtᵢ.

The portion of catalyst to be withdrawn may vary widely, e.g. from 1 to 90% based on total catalyst. In general, where more than 90% of catalyst would have to be replaced in order to achieve the above-mentioned minimum required activity level, it may be more economic to just replace all catalyst, as is done in the fifth step of the present method which is further discussed below. Preferably, in the fourth step of the present method, 2 to 40%, more preferably 3 to 20%, and most preferably 4 to 10% of catalyst based on total catalyst is replaced. Preferably, at most 40%, more preferably at most 30%, more preferably at most 25%, more preferably at most 20%, more preferably at most 15%, more preferably at most 10%, more preferably at most 7%, and most preferably at most 4% of catalyst based on total catalyst is replaced. Further, preferably, at least 2%, more preferably at least 3%, more preferably at least 4%, more preferably at least 5%, more preferably at least 7%, more preferably at least 10%, more preferably at least 15%, and most preferably at least 20% of catalyst based on total catalyst is replaced.

As mentioned above, at a certain point of time which may be after having replaced a portion of the catalyst only once or more times as described above, it may be more economic to just replace all catalyst than to replace a relatively large portion by fresh catalyst in order to achieve the above-mentioned minimum required activity level. Therefore, in accordance with the fifth step of the present method, at the end of a time period ΔT all of the catalyst is withdrawn and the method is repeated from the first step (i.e. by placing fresh catalyst into the reactor). Preferably, before replacing said catalyst, all the reactants and products are first withdrawn from the reactor. Preferably, the withdrawn catalyst is replaced by a substantially equivalent amount of fresh catalyst. After having replaced said catalyst, the introduction of reactants into the reactor is restarted.

Said time period ΔT runs from the time at which the reactants are introduced in the second step, after having performed the first step, to the time at which all catalyst is replaced by fresh catalyst in the fifth step. That is to say, said time period ΔT does not run from the time at which the reactants are introduced into the reactor after having replaced a portion of the catalyst by fresh catalyst. Thus, after having replaced all of the catalyst by fresh catalyst a new time period ΔT starts running by restarting the introduction of reactants into the reactor.

As time progresses the catalyst remaining in the reactor after each partial withdrawal in the repeated fourth step of the present method gets more and more deactivated. Therefore, in order to achieve the above-mentioned minimum required activity level upon partial replacement, (i) the amount of catalyst to be replaced may be increased and/or (ii) the time period Δtᵢ may be shortened. For example, in a case where i = 3, the amount of catalyst to be replaced at the end of Δt₃ > the amount of catalyst to be replaced at the end of Δt₂ > the amount of catalyst to be replaced at the end of Δt₁ and/or Δt₃ < Δt₂ < Δt₁.

As mentioned above, in the present catalyst replacement method catalyst is replaced by fresh (not regenerated) catalyst. Nevertheless, it is envisaged that within the cycle of the present method of first replacing a portion of the catalyst by fresh catalyst one or more times before replacing all of the catalyst by fresh catalyst, all or a portion of the catalyst is regenerated one or more times. Preferably, regeneration takes place in situ and is performed on all of the catalyst that is contained in the reactor. Further, it is preferred that where at the end of a time period Δtᵢ a portion of the catalyst is to be replaced by fresh catalyst, regeneration of the catalyst is performed first, because at that time the reactor cannot be used for making the desired product anyway and is therefore usually taken from service.

When regenerating a catalyst any cokes deposited on the catalyst may be burnt off. Desirably, the catalyst regeneration is carried out in the presence of a gas comprising oxygen or other oxidants. Examples of other oxidants include, but are not necessarily limited to, singlet O₂, O₃, SO₃, N₂O, NO, NO₂, N₂O₅, and mixtures thereof. Air and air diluted with nitrogen or CO₂ are desired regeneration gases. The oxygen concentration in air can be reduced to a controlled level to minimize overheating or creating of hot spots.

Desirably, the catalyst is regenerated to a level of remaining coke from about 0.01 wt % to about 15 wt % of the weight of the catalyst. In general, always some coke will remain after regeneration which is why regeneration will not result in full (100%) recovery of the original activity of fresh catalyst. In general, after a few regeneration cycli, it will become increasingly difficult to achieve a certain level of remaining cokes on the catalyst.

The catalyst regeneration temperature should be from about 250 °C to about 750 °C, and desirably from about 500°C to about 700 °C. If the regeneration reaction takes place at a temperature considerably higher than the process to which the present catalyst replacement method is applied, it may be desirable to cool the regenerated catalyst to a lower temperature before use in the process. An externally located heat exchanger may be used to remove some heat from the catalyst.

Desirably, catalyst regeneration is carried out on deactivated catalyst that has been stripped of most of readily removable organic materials (organics) in a stripper or stripping chamber first. This stripping can be achieved by passing a stripping gas over the spent catalyst at an elevated temperature. Gases suitable for stripping include steam, nitrogen, helium, argon, methane, CO₂, CO, hydrogen, and mixtures thereof. A preferred gas is steam. Acceptable temperatures of stripping are from about 250°C to about 750 °C, and desirably from about 350°C to about 675 °C.

The solid, heterogeneous catalyst used in the present catalyst replacement method is preferably a fixed bed catalyst which can be of any shape, including for example structured packed catalyst, randomly packed catalyst, etc. Examples of structured packings of catalyst are monoliths which are blocks containing canals the walls of which are covered with catalyst. A vertical, tubular reactor may comprise a stack of such structured packings from top to bottom, in which case for example only the first one or two packings are replaced by fresh ones at the end of a time period Δtᵢ (time period for partially replacing catalyst) in the present catalyst replacement method. Preferably, the catalyst to be used is a randomly packed catalyst.

As mentioned above, more specifically, as demonstrated in the Examples below, a catalytic process to which the present catalyst replacement method may be applied is a process wherein methylphenylcarbinol (MPC; 1-phenylethanol) is dehydrated into styrene. This dehydration process is well documented in literature; see further below.

An example of a multi-step process wherein styrene is produced from 1-phenylethanol in the last step of such process, is a process for the coproduction of propylene oxide and styrene. Such multi-step process is herein also referred to as Styrene Monomer/Propylene Oxide (SM/PO) process. In general such SM/PO process involves the steps of (i) reacting ethylbenzene with oxygen or air to form ethylbenzene hydroperoxide, (ii) reacting the ethylbenzene hydroperoxide thus obtained with propene in the presence of an epoxidation catalyst to yield propylene oxide and 1-phenylethanol, and (iii) converting the 1-phenylethanol into styrene by dehydration using a dehydration catalyst.

The processes and catalysts for dehydrating 1-phenylethanol, in the presence of a dehydration catalyst, into styrene (and water), as described in WO 99/42425 and WO 99/42426, can be used. However, any other suitable process or catalyst known to someone skilled in the art can in principle be used.

The production of styrene by dehydrating 1-phenylethanol can be carried out both in the gas phase and in the liquid phase. Suitable dehydration catalysts include for instance acidic materials like alumina, alkali alumina, aluminium silicates and H-type synthetic zeolites. Dehydration conditions are also well known and usually include reaction temperatures of 100-200 °C for liquid phase dehydration and 210-320 °C, typically 280-310 °C, for gas phase dehydration. Pressures usually range from 0.1 to 10 bar. Gas phase dehydration at relatively low pressure is preferred to suppress styrene oligomerisation. In a preferred embodiment the gas phase dehydration is carried out at a temperature in the range of 250 to 330 °C using an alumina-based dehydration catalyst. Preferably, the reactor used in dehydrating 1-phenylethanol to which process the present catalyst replacement method may be applied, is a substantially vertical, multitubular reactor wherein the reactants and products flow downwardly through the reactor from top to bottom.

Other catalytic processes to which the present catalyst replacement method may be applied are hydroprocessing processes.

The invention is further illustrated by the following Examples.

### Comparative Example

In this experiment, the process carried out involved the dehydration of 1-phenylethanol into styrene and water using an alumina catalyst. The reactor used was a vertical, multitubular reactor containing multiple vertical tubes that contained randomly packed catalyst. The tubes had identical dimensions and a cylindrical cross-section. The reactant was fed at the top of the tubular reactor, and the reactant and products flowed downwardly through the tubes from top to bottom.

Firstly, in this Comparative Example, all of the tubes inside the reactor were randomly packed with fresh (not regenerated) catalyst. A 1-phenylethanol feed was then introduced into the top of the reactor. The reactor was then continuously operated to catalyze the dehydration of 1-phenylethanol into styrene and water. The dehydration was carried out at standard conditions of around 0.8 bara pressure and a temperature of around 300 °C. Said values are average values because the pressure and temperature vary across the reactor due to pressure drop and heat effects. The feed rate of 1-phenylethanol was maintained at 50 tonnes per hour. During said dehydration, the randomly packed catalyst was substantially stationary. As time progressed, said reaction created deactivated catalyst and the catalyst was non-uniformly deactivated across the reactor. The portion as contained in the top layer in each of the reactor tubes was deactivated to a greater extent than the catalyst beneath said top layer.

Twelve months after the time at which the 1-phenylethanol feed was introduced for the first time into the reactor, all of the catalyst was withdrawn and replaced by fresh catalyst. That is to say, time period ΔT as defined above was 12 months.

### Example

The experiment of the Comparative Example was repeated, except that nine months after the time at which the 1-phenylethanol feed was introduced for the first time into the reactor, a portion of the catalyst was withdrawn and replaced by fresh catalyst. That is to say, the first time period Δt₁ (i.e. Δtᵢ where i = 1) as defined above was 9 months.

The portion of the catalyst withdrawn was the top layer in each of the reactor tubes, representing only 7% of total amount of catalyst inside each of said tubes. Said top layer was withdrawn by applying suction to the top of each tube. Withdrawing such catalyst top layer is herein referred to as "catalyst skimming".

Further, nineteen months after the time at which the 1-phenylethanol feed was introduced for the first time into the reactor, all of the catalyst was withdrawn and replaced by fresh catalyst. That is to say, time period ΔT as defined above was 19 months, and within said time period ΔT, partial catalyst replacement took place only once (i.e. for Δtᵢ wherein i is from 1 to n, n was 1, and Δt₁ (9 months) was smaller than ΔT (19 months)).

Upon comparing the results of the above Comparative Example with that of this Example, it appeared that the time average level of production of styrene per time unit (i.e. amount of styrene discharged from the bottom of the reactor / time) in time period ΔT for the above Comparative Example was substantially the same as that for this Example. The total amount of fresh catalyst used in this Example was 107% relative to that used in the above Comparative Example. Therefore the ratio of the monthly average amount of fresh catalyst used in the above Comparative Example to that used in this Example was: 100/12 to 107/19, i.e. 1.5 to 1. Therefore, on time average, 50% more fresh catalyst was needed in the case where catalyst skimming was not performed (i.e. in the above Comparative Example).

The above comparison demonstrates that by partially withdrawing catalyst within the time period ΔT at the end of which all of the catalyst has to be replaced by fresh catalyst, wherein the withdrawn portion of the catalyst is deactivated to a greater extent than the portion of the catalyst which remains within the reactor, and replacing the partially withdrawn catalyst by fresh catalyst, less fresh catalyst is needed to achieve a certain production volume per time unit. In other words, more efficient use of the catalyst is made and consequently catalyst consumption is reduced.

## Claims

1. Method of replacing deactivated heterogeneous catalyst by fresh catalyst, comprising:
(1) placing fresh catalyst into a reactor;
(2) introducing reactants into the reactor;
(3) continuously operating the reactor to catalyze a reaction of the reactants to products, wherein the catalyst is substantially stationary, the reaction creates deactivated catalyst and the catalyst is non-uniformly deactivated across the reactor;
(4) at the end of a time period Δtᵢ: withdrawing a portion of the catalyst, placing fresh catalyst into the part of the reactor from which said portion of the catalyst has been withdrawn, and repeating the method from step (2); and
(5) at the end of a time period ΔT: withdrawing all of the catalyst and repeating the method from step (1);
in which method:
- Δtᵢ runs from the time at which the reactants are introduced in step (2) to the time at which a portion of the catalyst is replaced by fresh catalyst in step (4);
- ΔT runs from the time at which the reactants are introduced in step (2), after having performed step (1), to the time at which all catalyst is replaced by fresh catalyst in step (5);
- i in Δtᵢ is an integer and is from 1 to n;
- n is equal to or greater than 1 and represents the number of times that within ΔT a portion of the catalyst is replaced by fresh catalyst in step (4);
- in repeating the method from step (2) after having replaced a portion of the catalyst by fresh catalyst at the end of Δtₙ, step (4) is not performed but step (5) is performed;
- the summation of all Δtᵢ, wherein i is from 1 to n, is smaller than ΔT; and
- the portion of the catalyst to be withdrawn in step (4) is deactivated to a greater extent than the portion of the catalyst remaining in the reactor.

2. Process according to claim 1, wherein the catalyst is a fixed bed catalyst.

3. Process according to claim 1 or 2, wherein the reactor is a multitubular reactor.

4. Process according to any one of the preceding claims, wherein the reactor is a substantially vertical, tubular reactor which is operated in downflow mode.

5. Process according to any one of the preceding claims, wherein the number n of time periods Δtᵢ within time period ΔT is from 1 to 10.

6. Process according to any one of the preceding claims, wherein the reactor is a substantially vertical, tubular reactor which is operated in downflow mode, and wherein at the end of a time period Δtᵢ a portion of the catalyst that originates from the top or upper part of the reactor is replaced by fresh catalyst.

7. Process according to any one of the preceding claims, wherein the reactants comprise 1-phenylethanol, the catalyst is an alumina catalyst and the products comprise styrene and water.
